# EUROPEAN PATENT SPECIFICATION

(11) **EP 1 209 965 B1**
(45) Date of publication and mention of the grant of the patent: **21.07.2004**
(21) Application number: 00963212.6
(22) Date of filing: 07.09.2000
(51) Int. Cl.: A01J 7/04

(54) **METHOD AND APPARATUS FOR TEAT TREATMENT**
VERFAHREN UND VORRICHTUNG ZUR ZITZENBEHANDLUNG
PROCEDE ET DISPOSITIF POUR LE TRAITEMENT DE TRAYON

(30) Priority: 09.09.1999 SE 9903199
(43) Date of publication of application: 05.06.2002
(73) Proprietor: DeLaval Holding AB, 147 21 Tumba (SE)
(72) Inventor: ERIKSSON, Jan, S-147 63 Uttran (SE)
(74) Representative: Estreen, Lars
(86) International application number: PCT/SE2000/001735
(87) International publication number: WO 2001/017338

(56) References cited:
- EP-A1- 0 645 079
- EP-A1- 0 728 412
- EP-A2- 0 332 235
- EP-A2- 0 527 509
- US-A- 5 235 937

## Description

The present invention generally relates to dairy farm machine milking and to teat treatments related thereto.

Particularly, the invention relates to a method for forced drying of teats in a teat cleaning apparatus, to the apparatus itself and to an automated milking system comprising said teat cleaning apparatus.

### DESCRIPTION OF RELATED ART AND BACKGROUND OF THE INVENTION

When a milking animal presents for milking it is important to ensure that the teat is free of any soiling or condition that could contaminate milk drawn from the teat by a milking apparatus. This need applies to both manual and automatic application of milking apparatus.

Various teat cleaning techniques have been proposed and applied such as water or cleaning fluid sprays and brushes. For instance, US 5,673,650, US 5,211,132, US 5,235,937 and US 4,305,346 describe all teat cleaning apparatuses using said techniques.

A typical teat cleaning apparatus comprises a teat cleaning cup having a teat receiving aperture and means such as cleaning liquid supply apertures for ejecting cleaning liquid on the teat, rotating brushes or the like, within the aperture, which are effective to release unwanted material such as dirt from the teat surface during cleaning. The teat cleaning cup may be held in place by means of vacuum supplied to said cup or by a robot arm.

Subsequent to washing and before milking takes place the teat is preferably dried. The reason for this is mainly twofold; firstly if the teat is wet when the teat cup for milking is applied the friction between the teat and the teat cup liner is low and hence the teat cup crawls up the teat, which may cause liner slips and other unwanted phenomena during milking, and secondly there is a higher risk of transferring contaminants from the dairy animal to the collected milk, or from the milking machine to the teat, if there is water or washing liquid left in the teat cup when milking starts.

In order to dry the teats after a wet washing sequence, brushes may be kept rotating in a dry condition (i.e. without supply of cleaning liquid), thereby achieving a teat draining effect along with removal of any contaminated residual liquid. This technique, depicted in said US 5,211,132 and US 5,235,937 patents, however, needs the provision of brushes.

Another technique is to expose the teat to compressed air within the cleaning teat cup. It may, however, be difficult to obtain completely dry teats using such a technique, as water or moisture often remains in the cup subsequent to drying. This may be explained partly by that the air blown towards the teat is expanded while exiting the blow-off nozzle, thereby cooling the air surrounding the teat, and hence the moisture absorption capacity of the surrounding air is reduced, partly by the occurrence of air whirls which whirl up remaining water in the cup, whereby the water hits the teat over and over again. The drying time may hereby be extremely long.

### SUMMARY OF THE INVENTION

Accordingly, it is an object of the present invention to provide a method for forced drying of a teat in a teat cleaning device comprising a teat receiving means having a teat receiving opening, teat receiving opening sealing means, cleaning means and vacuum-supplying means, which avoids at least one of the problems discussed above.

It is in this respect a particular object of the invention to provide such a method that is effective, fast, accurate, reliable, easy to install and perform, and particularly of low cost.

It is yet a further object of the invention to provide the method in such a way that it is easily reconfigurable to meet changing demands.

These objects are, according to one aspect of the invention, attained by a method as claimed in Claim 1.

A further object of the present invention is to provide an apparatus for performing the method according to the first aspect of the invention.

In this respect, it is yet a further object of the invention to be integratable in an automated milking system.

Consequently, there is according to a second aspect of the present invention provided an apparatus as claimed in Claim 5.

Further characteristics of the invention and advantages thereof will be evident from the following detailed description of embodiments of the invention, which are shown in the accompanying drawings.

### BRIEF DESCRIPTION OF THE DRAWINGS

The present invention will become more fully understood from the detailed description of embodiments of the present invention given hereinbelow and the accompanying Figs. 1-4 which are given by way of illustration only, and thus are not limitative of the invention.
Fig. 1 displays schematically a cross-sectional view of a first embodiment of a teat cleaning apparatus, where the method according to the present invention may be implemented.
Fig. 2 displays schematically a cross-sectional view of a second embodiment of a teat cleaning apparatus, where the method according to the present invention may be implemented.
Fig. 3 displays schematically a cross-sectional view of the first embodiment during a particular phase of the inventive method.
Fig. 4 displays schematically a cross-sectional view of the first embodiment during an alternative particular phase of the inventive method.

### DETAILED DESCRIPTION OF EMBODIMENTS

In the following description, for purposes of explanation and not limitation, specific details are set fourth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

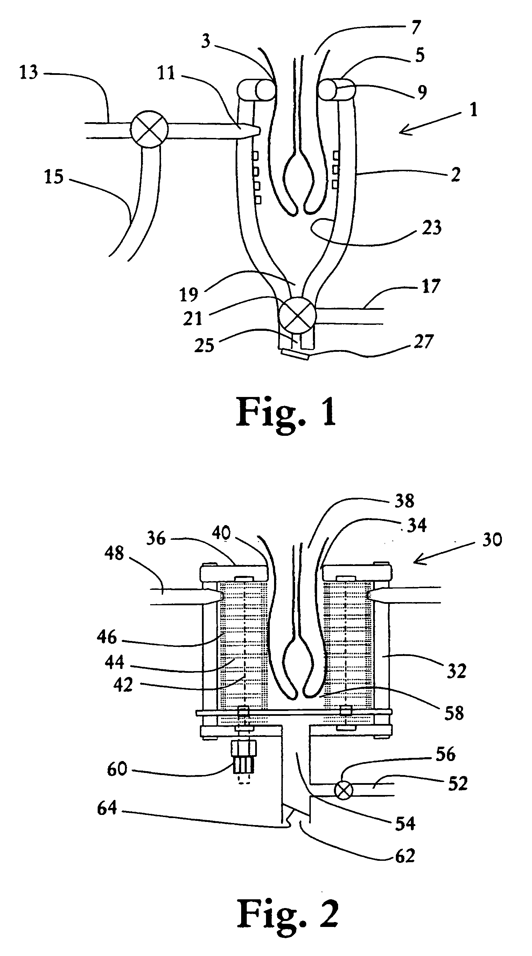

Figs. 1 and 2 show two embodiments of a device intended for cleaning, and optionally pre-milking, an animal, where the method according to the present invention may be implemented. The invention is not limited to the use of these devices, but is also conceivable to adapt to other devices featured in a similar manner. Consequently, the devices themselves do not depict any inventive features, but serve just as an example in which the inventive method may be adopted.

Referring to Fig. 1, a first embodiment of a teat cleaning and pre-milking device 1 is shown, comprising a teat receiving means in the shape of an approximately cylindrical teat cup 2 with a teat receiving opening 3 in its upper end surface 5. Teat cup is intended to be placed under the udder of an animal to be milked with opening 3 below a teat 7 which is to be cleaned. Teat cup 2 is then raised so that teat 7 enters through opening 3. Opening 3 has sealing means in the shape of a resilient sealing collar 9 which is in substantially airtight sealing contact with the udder when teat 7 is fully inserted into teat cup 2. Teat cup 1 has cleaning means in the form of at least one approximately tangential inlet nozzle 11 near to the upper surface 5. A cleaning fluid supplying means in the form of a hose 13 is connected to a cleaning fluid supply and an air supplying means in the form of a hose 15 is connected to an air supply (not shown). A vacuum supplying means in the form of a non-collapsible pipe 17, connected to a vacuum supply (not shown), is connected to an outlet opening 19 in the base of teat cup 1 via a valve means 21.

A teat is cleaned by being inserted into teat cup 2 and sprayed by high speed cleaning fluid ejected from nozzle 11. The impact of the fluid on a circular inner wall 23 of the teat cup 2 produces vortices which clean the teat due to their turbulent motion. This turbulent motion, and consequential cleaning effect, can be increased and adjusted, for example, by pulsating and/or varying the intensity of the fluid flow, injecting air into the fluid flow and applying a vacuum to the teat cup. The cleaning fluid leaves the teat cup 2 via outlet opening 19 which has an outlet 25 with a non-return valve 27 which permits the cleaning water to drain away either to a sewage system or to a storage system for possible examination and recycling. Preferably the draining of the cleaning fluid from the teat cup 2 is assisted by a vacuum (not shown) applied to the outlet 25. Using a vacuum causes the teat to expand which cracks and loosens any dried-on matter on the teat. This makes it easier to remove the dried-on matter during the cleaning process.

Referring to Fig. 2, a second embodiment of a teat cleaning and pre-milking device 30 is shown, comprising a teat receiving means in the shape of a box-like holder 32 with a teat receiving opening 34 in its upper end surface 36. Holder 32 is intended to be placed under the udder of an animal to be milked with opening 34 below a teat 38 which is about to be cleaned. Holder 32 is then raised so that teat 38 enters the holder through opening 34. Opening 34 has sealing means in the shape of a resilient sealing rubber or plastic collar 40 which is in contact with the udder when teat 38 is fully inserted into holder 32. Holder 32 contains a plurality of cleaning means 42 shown here as elongated cylindrical brushes 44 with bristles 46. Holder 32 also contains cleaning fluid supplying means in the form of a hose 48 connected to a cleaning fluid supply (not shown), and vacuum supplying means in the form of a non-collapsible pipe 52 connected to a vacuum supply (not shown). Vacuum supplying pipe 52 is connected to an outlet opening 54 in the base of holder 32 via a valve means 56. Brushes 44 are each oriented with their longitudinal axis substantially perpendicular to the plane of upper surface 36 and are arranged in a circle with a central space 58 able to receive a teat. Brushes 44 are rotatably mounted on holder 32 and can be rotated by driving means 60.

A teat 38 is cleaned by first being fully inserted into holder 32 and then being brushed by rotating brushes 44 preferably while cleaning fluid is supplied through cleaning fluid supplying means 48. Cleaning fluid can be supplied as a pulsating stream to improve the cleaning effect. The cleaning fluid leaves the holder via outlet opening 54 which has an outlet 62 with a non-return valve 64 which permits the cleaning water to drain away either to a sewage system or to a storage system for possible examination and recycling. Preferably the draining of the cleaning fluid is assisted by a vacuum (not shown) applied to the outlet 62.

The present invention relates to a method for forced drying of teats in a teat cleaning apparatus, e.g. such as any of those depicted above, to the apparatus itself and to an automated milking system comprising said teat cleaning apparatus.

The inventive method generally comprises the step of supplying vacuum via vacuum supply means 17, 52 to teat cup 2 or box-like holder 32, generally known as teat receiving means, while the same is removed from teat 7 or 38 subsequent to washing, and optionally pre-milking, thus causing remaining liquid to be sucked away from, or wiped off, the teat.

The removal of the teat receiving means from the teat should preferably be performed relatively slowly such that the drying endures at least a second.

The removal may be performed by a pneumatically or otherwise driven robot arm or may be performed manually.

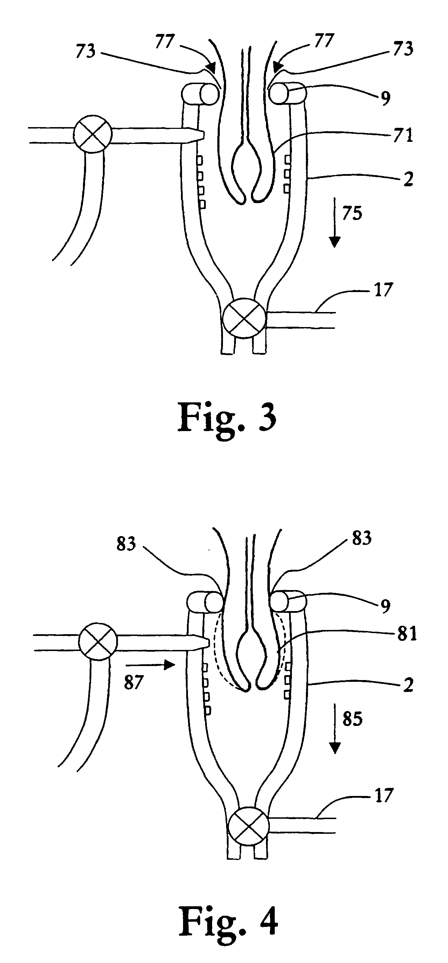

With reference next to Fig. 3, which schematically shows a cross-sectional view of the first embodiment of a teat cleaning apparatus during a particular phase of the inventive method, i.e. halfway through the removal of teat cup 2 from a relatively small teat 71, there is provided an air gap 73 between teat 71 and the sealing means 9 during removal (indicated by arrow 75) of teat cup 2 from teat 71, thus causing ambient air to be sucked through said gap (indicated by arrows 77) at high velocity to thereby dry teat 2. The smaller the air gap is, the faster ambient air is sucked through said gap and the more effective the drying action will be.

With reference next to Fig. 4, which schematically shows a cross-sectional view of the first embodiment of a teat cleaning apparatus during an alternative particular phase of the inventive method, i.e. halfway through the removal of teat cup 2 from a relatively large teat 81, there is provided a substantially airtight sealing contact 83 between teat 81 and the sealing means 9, at least during the initial part of the removal (indicated by arrow 85) of the teat cup from the teat, thus causing a wiping movement of the sealing means at the teat to thereby dry said teat.

If the teat 81 is very large and if the vacuum applied is too heavy, it may cause the teat to enlarge as indicated by the dotted line in Fig. 4. Hence, the teat is caught in the teat cup and further lowering of the teat cup just stretches the teat until it finally suddenly gets released. To avoid such an unwanted behavior the vacuum level may be adjusted to a lower value, preferably at least during the initial part of the removal. Alternatively, air, e.g. compressed air, may be supplied (indicated by arrow 87) to the teat cup for a predetermined time period during the initial part of the removal of the teat cup from the teat, thus decreasing the pressure gradient between the teat cup and ambient air, to thereby optimize the drying action of said teat. Air may optionally be supplied to the teat cup through apertures in the sidewall of the teat cup or in the sealing means (not shown in Fig. 4).

It is, however, preferred to provide a small air gap between the teat and the teat cup, which may be ensured by designing the inventive method and teat cleaning apparatus properly. Two parameters of particular importance are in this respect the vacuum level and the design of the teat cup, or more specifically the aperture size of the sealing means. Preferably, the sealing means may be adapted for the teats that should be cleaned. In order to use a single teat cup for cleaning of a wide variety of dairy animals, the sealing means may preferably be inflatable or otherwise adjustable in size to be adapted for a wide range of teat sizes.

Alternatively, the vacuum, which is supplied to the teat cup while removing it from the teat subsequent to washing, is adjusted in dependence of the teat such that an individually adapted drying action is performed. Teat parameters may comprise teat size, teat condition and health, etcetera.

Optionally, the vacuum is adjusted in dependence of the washing action such that a drying action adapted to the washing action is performed. Washing action parameters may comprise washing fluid, washing time, etcetera.

It is particularly preferred that the present invention is adapted for implementation in apparatuses for teat treatment as depicted in the Swedish patent applications No. 9901647-9 and No. 9902206-3 filed by present applicant.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A method for forced drying of a teat of a dairy animal in a teat cleaning apparatus comprising a teat receiving means having a teat receiving opening, a teat receiving opening sealing means, a cleaning means and a vacuum-supplying means, wherein, during washing, the teat is received by the teat receiving means through said opening and exposed to the cleaning and vacuum-supplying means, said sealing means being in a substantially airtight sealing contact with the udder of the dairy animal, **characterized by** the step of:
- supplying vacuum to the teat receiving means (2, 32) while removing (75, 85) the teat receiving means (2, 32) from the teat (7, 38) subsequent to washing, thus causing remaining liquid to be sucked away from, or wiped off, the teat (7, 38), wherein
- an air gap (73) is provided between the teat (7, 38) and the sealing means (9, 40) while removing (75) the teat receiving means (2, 32) from the teat, thus causing ambient air to be sucked (77) through said gap at high velocity to thereby dry said teat; or
- a substantially airtight sealing contact (83) is provided between the teat (7, 38) and the sealing means (9, 40), at least during the initial part of the removal (85) of the teat receiving means (2, 32) from the teat, thus causing a wiping movement of the sealing means at the teat to thereby dry said teat.

2. The method as claimed in Claim 1, **characterized by** removing (75, 85) the teat receiving means (2, 32) from the teat (7, 38) relatively slowly such that the drying performed endures at least a second.

3. The method as claimed in Claim 1 or 2, **characterized by** supplying air (87), e.g. compressed air, to the teat receiving means (2, 32) for a predetermined time period during the initial part of the removal (75, 85) of the teat receiving means from the teat (7, 38), thus decreasing the pressure gradient between the teat receiving means and ambient air, to thereby optimize the drying action of said teat.

4. The method as claimed in any of Claims 1-3, **characterized by** adjusting the vacuum, which is supplied to the teat receiving means (2, 32) while removing the teat receiving means (2, 32) from the teat (7, 38) subsequent to washing, depending on the teat such that an individually adapted drying action is performed.

5. A teat cleaning apparatus for forced drying of a teat of a dairy animal comprising a teat receiving means having a teat receiving opening, a teat receiving opening sealing means, a cleaning means and a vacuum-supplying means, wherein, during washing, the teat is received by the teat receiving means through said opening and exposed to the cleaning and vacuum-supplying means, said sealing means being in a substantially airtight sealing contact with the udder of the dairy animal, **characterized in that** said apparatus is arranged for supplying vacuum to the teat receiving means (2, 32) during the removal (75, 85) of the teat receiving means (2, 32) from the teat (7, 38) subsequent to washing, thus being arranged for causing remaining liquid to be sucked away from, or wiped off, the teat, wherein
- said apparatus is arranged to provide an air gap (73) between the teat (7, 38) and the sealing means (9, 40) during removal (75) of the teat receiving means (2, 32) from the teat, thus being arranged for causing ambient air to be sucked (77) through said gap at high velocity to thereby dry said teat; or to provide a substantially airtight sealing contact (83) between the teat (7, 38) and the sealing means (9, 40), at least during the initial part of the removal (85) of the teat receiving means (2, 32) from the teat, thus being arranged for causing a wiping movement of the sealing means at the teat to thereby dry said teat.

6. The apparatus as claimed in Claim 5, **characterized in that** said apparatus is arranged for removal (75, 85) of the teat receiving means (2, 32) from the teat relatively slowly such that the drying performed endures at least a second.

7. The apparatus as claimed in Claim 5 or 6, **characterized in that** said apparatus is arranged for supplying (87) air, e.g. compressed air, to the teat receiving means (2, 32) for a predetermined time period during the initial part of the removal (75, 85) of the teat receiving means from the teat (7, 38), thus being arranged for decreasing the pressure gradient between the teat receiving means and ambient air, to thereby optimize the drying action of said teat.

8. The apparatus as claimed in any of Claims 5-7, **characterized in that** said apparatus is arranged for adjusting the vacuum, which is supplied to the teat receiving means (2, 32) during removal (75, 85) of the teat receiving means (2, 32) from the teat (7, 38) subsequent to washing, depending on the teat such that an individually adapted drying action is performed.

## Revendications

1. Procédé de séchage forcé d'un trayon d'un animal laitier dans un appareil de nettoyage de trayon, comprenant des moyens recevant le trayon qui comportent un orifice recevant le trayon, des moyens d'étanchéité de l'orifice recevant le trayon, des moyens de nettoyage et des moyens d'alimentation en vide, dans lequel, pendant le lavage, le trayon est reçu par les moyens recevant le trayon au travers dudit orifice et exposé aux moyens de nettoyage et d'alimentation en vide, lesdits moyens d'étanchéité étant en contact d'étanchéité sensiblement imperméable à l'air avec la mamelle dudit animal laitier, **caractérisé par** les étapes consistant à :
- délivrer du vide aux moyens recevant le trayon (2, 32) tout en retirant (75, 85) les moyens recevant le trayon (2, 32) du trayon (7, 38) suite au lavage, ce qui amène le liquide restant à être aspiré vers l'extérieur du trayon (7, 38), ou évacué de celui-ci, dans lequel
- un espace d'air (73) est fourni entre le trayon (7, 38) et les moyens d'étanchéité (9, 40) alors qu'on retire (75) les moyens recevant le trayon (2, 32) du trayon, ce qui amène l'air ambiant à être aspiré (77) au travers dudit espace à grande vitesse pour ainsi sécher ledit trayon ; ou
- un contact d'étanchéité (83) sensiblement imperméable à l'air est prévu entre le trayon (7, 38) et les moyens d'étanchéité (9, 40), au moins pendant la phase initiale du retrait (85) des moyens recevant le trayon (2, 32) du trayon, ce qui entraîne un mouvement d'essuyage des moyens d'étanchéité au niveau du trayon pour ainsi sécher ledit trayon.

2. Procédé selon la revendication 1, **caractérisé en ce qu'**on retire (75, 85) les moyens recevant le trayon (2, 32) du trayon (7, 38) relativement lentement, de telle sorte que le séchage effectué dure au moins une seconde.

3. Procédé selon l'une quelconque des revendications 1 ou 2, **caractérisé en ce qu'**on délivre de l'air (87), par exemple de l'air comprimé, aux moyens recevant le trayon (2, 32) pendant un laps de temps prédéterminé pendant la phase initiale du retrait (75, 85) des moyens recevant le trayon du trayon (7, 38), ce qui fait diminuer le gradient de pression entre les moyens recevant le trayon et l'air ambiant, pour ainsi optimiser l'action de séchage dudit trayon.

4. Procédé selon l'une quelconque des revendications 1 à 3, **caractérisé en ce qu'**on règle le vide délivré aux moyens recevant le trayon (2, 32) tout en retirant les moyens recevant le trayon (2, 32) du trayon (7, 38) suite au lavage, en fonction du trayon, de telle sorte qu'on effectue une action de lavage adaptée à chaque cas.

5. Appareil de lavage de trayon pour le séchage forcé d'un trayon d'un animal laitier, comprenant des moyens recevant le trayon qui comportent un orifice recevant le trayon, des moyens d'étanchéité de l'orifice recevant le trayon, des moyens de nettoyage et des moyens d'alimentation en vide, dans lequel, pendant le lavage, le trayon est reçu par les moyens recevant le trayon au travers dudit orifice et exposé aux moyens de nettoyage et d'alimentation en vide, lesdits moyens d'étanchéité étant en contact d'étanchéité sensiblement imperméable à l'air avec la mamelle de l'animal laitier, **caractérisé en ce que** ledit appareil est agencé pour délivrer du vide aux moyens recevant le trayon (2, 32) pendant le retrait (75, 85) des moyens recevant le trayon (2, 32) du trayon (7, 38) suite au lavage ; il est donc agencé pour amener le liquide restant à être aspiré vers l'extérieur du, trayon, ou évacué de celui-ci, dans lequel
- ledit appareil est agencé pour fournir un espace d'air (73) entre le trayon (7, 38) et les moyens d'étanchéité (9, 40) pendant le retrait (75) des moyens recevant le trayon (2, 32) du trayon ; il est donc agencé pour amener l'air ambiant à être aspiré (77) au travers dudit espace à grande vitesse pour ainsi sécher ledit trayon, ou pour fournir un contact d'étanchéité (83) sensiblement imperméable à l'air entre le trayon (7, 38) et les moyens d'étanchéité (9, 40), au moins pendant la phase initiale du retrait (85) des moyens recevant le trayon (2, 32) du trayon ; il est donc agencé pour entraîner un mouvement d'essuyage des moyens d'étanchéité au niveau du trayon pour ainsi sécher ledit trayon.

6. Appareil selon la revendication 5, **caractérisé en ce que** ledit appareil est agencé pour retirer (75, 85) les moyens recevant le trayon (2, 32) du trayon relativement lentement, de telle sorte que le séchage effectué dure au moins une seconde.

7. Appareil selon l'une quelconque des revendications 5 ou 6, **caractérisé en ce que** ledit appareil est agencé pour délivrer (87) de l'air, par exemple de l'air comprimé, aux moyens recevant le trayon (2, 32) pendant un laps de temps prédéterminé pendant la phase initiale du retrait (75, 85) des moyens recevant le trayon du trayon (7, 38) ; il est donc agencé pour faire diminuer le gradient de pression entre les moyens recevant le trayon et l'air ambiant, pour ainsi optimiser l'action de séchage dudit trayon.

8. Appareil selon l'une quelconque des revendications 5 à 7, **caractérisé en ce que** ledit appareil est agencé pour régler le vide délivré aux moyens recevant le trayon (2, 32) pendant le retrait (75, 85) des moyens recevant le trayon (2, 32) du trayon (7, 38) suite au lavage, en fonction du trayon, de telle sorte qu'on effectue une action de lavage adaptée à chaque cas.

## Patentansprüche

1. Verfahren zum beschleunigten Trocknen einer Zitze eines Milchwirtschaftstieres in einer Zitzenreinigungsvorrichtung, die ein Zitzenaufnahmemittel mit einer Zitzenaufnahmeöffnung, ein Dichtmittel für die Zitzenaufnahmeöffnung, ein Reinigungsmittel und ein Unterdruckzuführungsmittel aufweist, wobei während des Waschens die Zitze von dem Zitzenaufnahmemittel durch die Öffnung aufgenommen wird und dem Reinigungs- und Unterdruckzuführungsmittel ausgesetzt wird, das Dichtmittel in einem im Wesentlichen luftdichten Dichtungskontakt mit dem Euter des Milchwirtschaftstieres ist, **gekennzeichnet durch** die folgenden Schritte:
- Zuführen des Unterdrucks an das Zitzenaufnahmemittel (2, 32) beim Entfernen (75, 85) des Zitzenaufnahmemittels (2, 32) von der Zitze (7, 38) nach dem Waschen, folglich ein Verbleiben von Flüssigkeit bewirkt wird, die von der Zitze (7, 38) weggesaugt oder abgewischt werden soll, wobei
- eine Luftlücke (73) zwischen der Zitze (7, 38) und den Dichtmitteln (9, 40) während der Entfernung (75) des Zitzenaufnahmemittels (2, 32) von der Zitze vorgesehen ist, folglich bewirkt wird, dass Umgebungsluft **durch** die Lücke mit einer hohen Geschwindigkeit gesaugt wird (77), um **dadurch** die Zitze zu trocknen; oder
- ein im Wesentlichen luftdichter Dichtkontakt (83) zwischen der Zitze (7, 38) und dem Dichtmittel (9, 40), zumindest während des Beginns der Entfernung (85) des Zitzenaufnahmemittels (2, 32) von der Zitze, vorgesehen ist, folglich eine Wischbewegung des Dichtmittels an der Zitze bewirkt wird, um **dadurch** die Zitze zu trocknen.

2. Verfahren nach Anspruch 1, **gekennzeichnet durch** Entfernen (75, 85) des Zitzenaufnahmemittels (2, 32) von der Zitze (7, 38) relativ langsam, so dass das durchgeführte Trocknen zumindest eine Sekunde dauert.

3. Verfahren nach Anspruch 1 oder 2, **gekennzeichnet durch** Zuführen von Luft (87), beispielsweise Druckluft, zu dem Zitzenaufnahmemittel (2, 32) für eine vorbestimmte Zeitperiode während des Beginns der Entfernung (75, 85) des Zitzenaufnahmemittels von der Zitze (7, 38), folglich der Druckgradient zwischen dem Zitzenaufnahmemittel (2, 32) und der Umgebungsluft erniedrigt wird, um **dadurch** den Trockenvorgang der Zitze zu optimieren.

4. Verfahren nach einem der Ansprüche 1 bis 3, **gekennzeichnet durch** Einstellen des Unterdrucks, der dem Zitzenaufnahmemittel (2, 32) während der Entfernung des Zitzenaufnahmemittels (2, 32) von der Zitze (7, 38) nach dem Waschen zugeführt wird, in Abhängigkeit der Zitze, so dass ein individuell angepasstes Trocknen durchgeführt wird.

5. Zitzenreinigungsvorrichtung für ein beschleunigtes Trocknen einer Zitze eines Milchwirtschaftstieres, dass ein Zitzenaufnahmemittel mit einer Zitzenaufnahmeöffnung, ein Dichtmittel für die Zitzenaufnahmeöffnung, ein Reinigungsmittel und ein Unterdruckzuführungsmittel aufweist, wobei während des Waschens die Zitze von dem Zitzenaufnahmemittel durch die Öffnung aufgenommen wird und dem Reinigungs- und Unterdruckzuführungsmittel ausgesetzt wird, das Dichtmittel in einem im Wesentlichen luftdichten Dichtungskontakt mit dem Euter des Milchwirtschaftstieres ist, **dadurch gekennzeichnet, dass** die Vorrichtung derart zum Zuführen von Unterdruck zu dem Zitzenaufnahmemittel (2, 32) während der Entfernung (75, 85) des Zitzenaufnahmemittels (2, 32) von der Zitze (7, 38) nach dem Waschen ausgebildet ist, folglich zum Bewirken ausgebildet ist, die verbleibende Flüssigkeit von der Zitze wegzusaugen oder wegzuwischen, wobei
- die Vorrichtung ausgebildet ist, eine Luftlücke (73) zwischen der Zitze (7, 38) und dem Dichtmittel (9, 40) während der Entfernung (75) der Zitzenaufnahmemittel (2, 32) von der Zitze vorzusehen, folglich zum Bewirken ausgebildet ist, Umgebungsluft durch die Lücke mit einer hohen Geschwindigkeit anzusaugen (77), um dadurch die Zitze zu trocknen; oder einen im Wesentlichen luftdichten Dichtkontakt (83) zwischen der Zitze (7, 38) und dem Dichtmittel (9, 40) zumindest während des Anfangs der Entfernung (85) des Zitzenaufnahmemittels (2, 32) von der Zitze (7, 38) vorzusehen, folglich zum Bewirken einer Wischbewegung des Dichtmittels an der Zitze ausgebildet ist, um dadurch die Zitze zu trocknen.

6. Vorrichtung nach Anspruch 5, **dadurch gekennzeichnet, dass** die Vorrichtung zur Entfernung (75, 85) des Zitzenaufnahmemittel (2, 32) von der Zitze relativ langsam ausgebildet ist, so dass das durchgeführte Trocknen zumindest eine Sekunde dauert.

7. Vorrichtung nach Anspruch 5 oder 6, **dadurch gekennzeichnet, dass** die Vorrichtung zum Zuführen (87) von Luft, beispielsweise Druckluft, zu dem Zitzenaufnahmemittel (2, 32) für eine vorbestimmte Zeitperiode während des Anfangs der Entfernung (75, 85) des Zitzenaufnahmemittels von der Zitze (7, 38) ausgebildet ist, folglich zum Erniedrigen des Druckgradienten zwischen dem Zitzenaufnahmemittel und der Umgebungsluft ausgebildet ist, um dadurch den Trockenvorgang des Zitze zu optimieren.

8. Vorrichtung nach einem der Ansprüche 5 bis 7, **dadurch gekennzeichnet, dass** die Vorrichtung zum Einstellen des Unterdruckes ausgebildet ist, der zu dem Zitzenaufnahmemittel (2, 32) während der Entfernung (75, 85) der Zitzenaufnahmemittel (2, 32) von der Zitze (7, 38) nach dem Waschen zugeführt wird, in Abhängigkeit von der Zitze, so dass ein individuell angepasstes Trocknen durchgeführt wird.
